# EUROPÄISCHE PATENTANMELDUNG

(11) **EP 0 610 725 A1**
(43) Veröffentlichungstag der Anmeldung: **17.08.1994**
(21) Anmeldenummer: 94101166.0
(22) Anmeldetag: 27.01.1994
(51) Int. Cl.: H04N 1/00

(54) **Farbfaxgerät**

(30) Priorität: 08.02.1993 DE 4303543
(71) Anmelder: Alcatel SEL Aktiengesellschaft, D-70435 Stuttgart (DE)
(72) Erfinder: Heil, Helge, D-65375 Oestrich-Winkel (DE)
(74) Vertreter: Knecht, Ulrich Karl

(57) **Zusammenfassung**

Es soll ein Farbfaxgerät mit handelsüblichen, kostengünstigen Mitteln realisiert werden.

Erfindungsgemäß enthält das Farbfaxgerät einen Personal Computer (PC) an dessen Standarddatenschnittstelle (V.24) ein Farbabtaster (F) angeschlossen ist. Ferner enthält der Personal Computer (PC) einen ISDN-Adapter (TA) zur Datenübertragung in Transparentmodus, sowie eine Druckerschnittstelle (SCSI) zum Anschließen eines Farbdruckers. Über eine Eingabeeinheit (E) sind, menuegesteuert, die Eingabe von Wahlzielen sowie Druckbefehle eingebbar.

## Beschreibung

Heutige Farbfaxgeräte zeichnen sich dadurch aus, daß sie einen Farbabtaster besitzen und die eine Farbvorlage darstellenden optisch/elektrisch gewandelten Daten zunächst einem Datenkompressionsalgorithmus unterworfen werden, bevor sie basierend auf dem Fax Gruppe 4 ISDN-Standard, über ein ISDN-Fernsprechnetz übertragen werden. Ein solches Farbfaxgerät ist mit einem Farbabtaster ausgerüstet, der mit den Farben Gelb, Magenta und Cyan arbeitet und mit einer Auflösung von 300 dpi einen Farbdruck herstellt (RICOH COLORFAX 8000DT, Firmenprospekt, Ausgabe 1992).

Da solche Farbfaxgeräte aufgrund ihrer sehr aufwendigen Technik sehr teuer sind, liegt der vorliegenden Erfindung die Aufgabe zugrunde, ein mit einfachen handelsüblichen Mitteln aufbaubares kostengünstiges Farbfaxgerät zu realisieren.

Diese Aufgabe wird erfindungsgemäß durch die technische Lehre des Patentanspruchs 1 gelöst.

In vorteilhafterweise kann ein handelsüblicher kostengünstiger Personal Computer verwendet werden, an dessen eine Standarddatenschnittstelle bildene V.24 Schnittstelle ein Farbabtaster angeschlossen wird. Zusätzlich ist nur eine kostengünstige ISDN-Adapaterkarte für Datenübertragung und eine Druckerschnittstelle vorzusehen. Dies bedeutet auch, daß ein Kunde anstelle eines fest eingebauten Farbdruckers, sich irgendeines beliebigen, auf seine Bedürfnisse zugeschnittenen Farbdruckers bedienen kann.

Weitere vorteilhafte Ausgestaltungen gemäß der Erfindung sind den Unteransprüchen zu entnehmen.

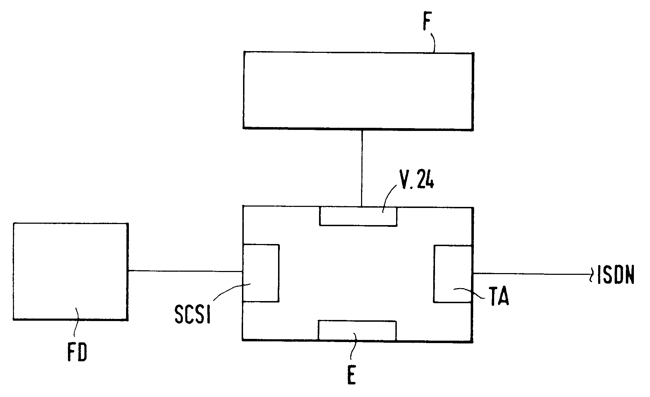

Im folgenden wird das erfindungsgemäße Farbfaxgerät anhand der Figur erläutert.

Ein erfindungsgemäßes Farbfaxgerät, wie in der Figur gezeigt, besteht aus einem Personal Computer PC und einem Farbabtaster F. Der Farbabtaster ist an eine Standarddatenschnittstelle, z.B. an eine V.24 Schnittstelle des Personal Computers PC angeschlossen. Ein solcher Farbabtaster F wandelt eine farbige Vorlage optisch/elektrisch in weiterverarbeitbare Daten um (vgl. z.B. DE 38 21 076 C2), die über die V.24 Schnittstelle zum Personal Computer übertragen werden.

Der Personal Computer enthält erfindungsgemäß einen ISDN-Adapter TA für bidirektionale Datenübertragung im Transparentmodus über ein ISDN-Fernsprechnetz. Somit kann eine sehr preisgünstige ISDN-PC-Karte für Datenübertragung verwendet werden, wodurch die sehr komplexen und damit teuren Fax-Gruppe 4 Algorithmen nicht implementiert werden müssen. Die eine farbige Bildvorlage darstellenden Daten werden einfach als Datenfiles, normalerweise HDLC gesichert übertragen.

Ferner enthält das erfindungsgemäße Farbfaxgerät eine Eingabeeinheit E, z.B. eine Tastatur und/oder eine Maus um einerseits das Wahlziel und andererseits Druckbefehle für empfangene Daten eingeben zu können. Zusätzlich weist der Personal Computer PC eine Druckerschnittstelle, z.B. eine SCSI-Schnittstelle (Small Computer System Interface) oder eine Centronics-Schnittstelle auf, so daß ein Farbdrucker FD anschließbar ist. Dies ermöglicht den Anschluß eines beliebigen Farbdruckers FD, wobei je nach Kundenwunsch ein Drucker mit mittlerer (preisgünstiger) oder hoher Farbauflösung (teurerer) gewählt werden kann oder vom Kunden völlig getrennt erworben werden kann.

Wenn nun eine farbige Vorlage als Farbfax übertragen werden soll, so legt der Benutzer die farbige Vorlage auf den Farbabtaster F und gibt über die Tastatur das gewünschte Wahlziel ein. Der Personal Computer wird dann menuegesteuert, z.B. mit Windows 3.1, den Farbabtaster F zum Abtasten der farbigen Vorlage ansteuern. Außerdem wird durch den Personal Computer PC über die ISDN-PC-Karte in üblicher Weise die Wahl ausgeführt und sodann die optisch/elektrisch gewandelten Daten des Farbabtasters F über das ISDM-Fernsprechnetz zum angewählten Teilnehmer übertragen.

In der anderen Übertragungsrichtung werden, durch den Personal Computer PC gesteuert, eine Farbvorlage darstellende im Transparentmodus übertragene Daten in einem Speicher (nicht dargestellt), z.B. auf einer Festplatte des Personal Computers abgelegt. Will nun ein Benutzer diese Daten als Farbvorlage ausgedruckt bekommen, so ist es lediglich notwendig, über die Tastatur einen Druckbefehl einzugeben, wodurch der Personal Computer an seiner Druckerschnittstelle die abgelegten Daten auf einen angeschlossenen Farbdrucker FD zum Reproduzieren ausgibt.

Die wesentlichen Komponenten des erfindungsgemäßen Farbfaxgerätes, der Farbabtaster F und der Personal Computer PC können auch in einem Gehäuse untergebracht sein.

Das erfindungsgemäße Farbfaxgerät stellt somit eine sehr preisgünstige Realisierung dar, die der Kunde je nach Qualitätsanforderung selbst bestimmen kann.

Abgesehen davon, können die verwendeten Bauelemente, wie der Personal Computer auch jederzeit anderweitig, nämlich als Personal Computer verwendet werden.

## Claims

1. Farbfaxgerät, bestehend aus einem Personal Computer (PC), der eine mit einem Farbabtaster (F) verbundene Standarddatenschnittstelle (V.24), einem ISDN-Adapter (TA) für bidirektionale Datenübertragung im Transparentmodus über ein ISDN-Fernsprechnetz, eine Eingabeeinheit (E) und eine Druckerschnittstelle (SCSI) zum Anschließen eines Farbdruckers (FD) enthält.

2. Farbfaxgerät, bei dem nach Eingabe eines Wahlzieles über die Eingabeeinheit (E), menuegesteuert durch den Personal Computer (PC) der Farbabtaster (F) zum Abtasten einer farbigen Vorlage angesteuert, die Wahl ausgeführt und die durch den Farbabtaster (F) optisch/elektrisch gewandelte Daten der Vorlage über den ISDN-Adapter (TA) zur Übertragung ausgegeben werden.

3. Farbfaxgerät nach Anspruch 1, bei dem über den ISDN-Adapter (TA) empfangene, eine Farbvorlage darstellende Daten in einem Speicher des Personal Computers (PC) abgelegt und nach Eingabe eines Druckbefehls über die Eingabeeinheit (E) durch den Personal Computer (PC) an der Druckerschnittstelle (SCSI) ausgegeben werden.

4. Farbfaxgerät nach Anspruch 1, bei dem der Farbabtaster (F) und der Personal Computer (PS) in einem Gehäuse untergebracht sind.
